# FASCICULE DE BREVET EUROPEEN

(11) **EP 0 620 474 B1**
(45) Date de publication et mention de la délivrance du brevet: **15.10.1997**
(21) Numéro de dépôt: 94400816.8
(22) Date de dépôt: 14.04.1994
(51) Int. Cl.: G02F 1/1345, H01R 4/04

(54) **Procédé de réalisation d'une cellule d'affichage avec reprise de contact de contre-électrode**
Verfahren zur Herstellung einer Anzeigezelle mit Kontaktierung für die Gegen-Elektrode
Method of making a display cell with realisation of the contact for the counter-electrode

(30) Priorité: 15.04.1993 FR 9304443
(43) Date de publication de la demande: 19.10.1994
(73) Titulaire: FRANCE TELECOM, 75015 Paris (FR); SOCIETE D'APPLICATIONS GENERALES D'ELECTRICITE ET DE MECANIQUE SAGEM, F-75016 Paris (FR)
(72) Inventeur: Vinouze, Bruno, F-22710 Port-Blanc (FR); Moreno, Jean-Yves, F-76300 Sotteville Les Rouen (FR); Lacroix, François, F-22300 Lannion (FR)
(74) Mandataire: Signore, Robert

(56) Documents cités:
- DE-A- 2 722 387
- US-A- 4 600 273
- PATENT ABSTRACTS OF JAPAN vol. 006, no. 252 (P-161) 10 Décembre 1982 & JP-A-57 148 721 (CITIZEN TOKEI KK) 14 Septembre 1982
- PATENT ABSTRACTS OF JAPAN vol. 006, no. 125 (P-127) 10 Juillet 1982 & JP-A-57 052 027 (TOSHIBA CORP) 27 Mars 1982
- PATENT ABSTRACTS OF JAPAN vol. 015, no. 296 (P-1231) 26 Juillet 1991 & JP-A-03 102 325 (MITSUBISHI ELECTRIC CORP) 26 Avril 1991

## Description

### Domaine technique

La présente invention a pour objet un procédé de réalisation d'une cellule d'affichage avec reprise de contact de contre-électrode. Elle trouve une application dans la réalisation d'écrans d'affichage, notamment à cristaux liquides.

### Etat de la technique antérieure

Une cellule d'affichage à cristaux liquides comprend généralement une première plaque transparente recouverte d'une contre-électrode et une seconde plaque, également transparente, recouverte de lignes et de colonnes d'adressage, et, dans le cas des écrans dits à matrice active, d'une matrice de transistors de commande et de pixels. Ces deux plaques sont tenues écartées par des espaceurs et forment un volume rempli de cristal liquide.

La contre-électrode est en général constituée par une fine couche d'oxyde d'indium et d'étain (ITO). Elle peut être complétée par un masque optique ou par des filtres colorés.

Les figures annexées 1 et 2 illustrent un procédé classique de réalisation d'une telle cellule, l'accent étant mis sur la manière de réaliser la connexion électrique entre la contre-électrode et les circuits de commande placés à l'extérieur de la cellule.

Pour réaliser une telle cellule, on réalise une première plaque P1, dite plaque de contre-électrode, par exemple en verre, sur laquelle on dépose la contre-électrode CE.

On réalise, par ailleurs, une seconde plaque P2, dite plaque d'électrodes, par exemple en verre, sur laquelle on dépose un réseau de lignes L et de colonnes C d'adressage, et une matrice de pixels Px. Les connexions électriques se font en bout de lignes et en bout de colonnes. Cette seconde plaque peut être réalisée en deux niveaux de masquage comme décrit dans le document FR-A-2 533 072.

Pour réaliser la connexion électrique de la contre-électrode CE, plutôt que de prévoir cette connexion directement sur la plaque de contre-électrode P1, on préfère établir cette connexion sur la plaque d'électrodes P2, avec les autres connexions. A cette fin, il est prévu des contacts particuliers 20, disposés par exemple aux quatre coins de la plaque d'électrodes et constitués d'un métal bon conducteur, par exemple de l'aluminium. Naturellement, cela impose d'établir une liaison entre la contre-électrode CE et ces contacts 20. Des plots conducteurs 12, par exemple en pâte à l'argent, sont donc disposés sur la contre-électrode, en des emplacements correspondant aux emplacements des contacts 20, c'est-à-dire, dans la variante illustrée, dans les quatre coins de la contre-électrode.

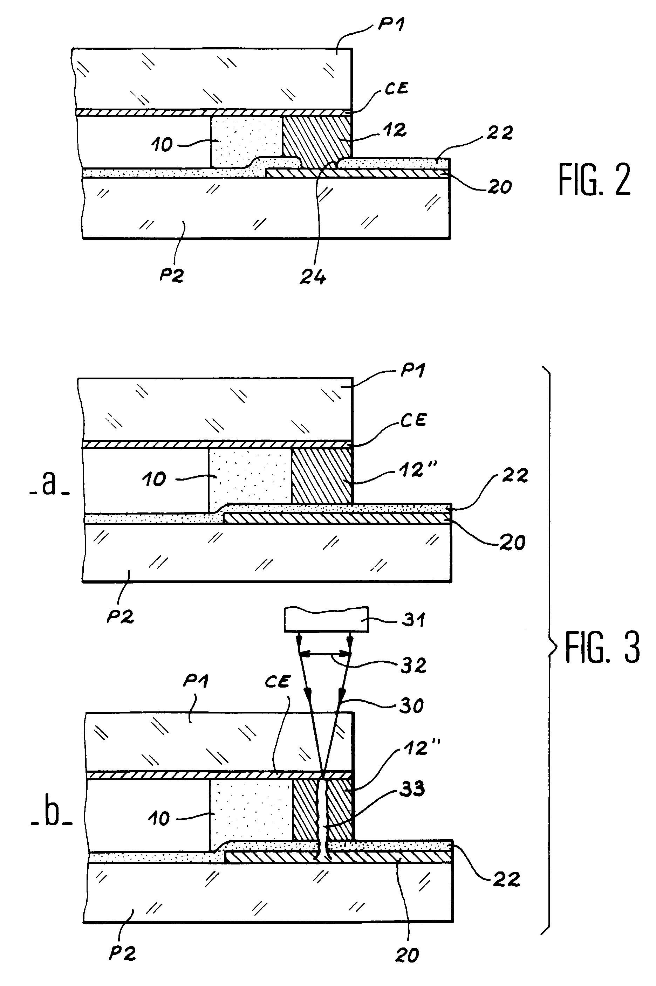

Pour éviter des phénomènes électrochimiques et prévenir également d'éventuels court-circuits entre les plaques, on recouvre généralement la plaque d'électrodes P2 d'une couche de passivation isolante. Il peut s'agir, par exemple, d'une couche de 300 nm de nitrure de silicium. Cette couche recouvrant les contacts 20, il est nécessaire, pour établir la liaison électrique entre la contre-électrode CE et les contacts 20, de percer cette couche aux endroits correspondant aux contacts. C'est ce qui est représenté sur la figure 2 où l'on voit, en coupe, la zone d'établissement de la liaison électrique entre la contre-électrode CE et un contact 20, à travers une ouverture 24 percée dans la couche de passivation 22, et par l'intermédiaire du plot 12 en pâte à l'argent.

Les ouvertures 24 sont obtenues par une opération complète de photolithographie avec résinage, alignement, insolation et développement de la résine, gravure de la couche de passivation et élimination de la résine.

Les deux plaques P1 et P2 ayant été réalisées et la couche de passivation ayant été gravée aux endroits appropriés, le procédé de réalisation de la cellule se poursuit par le dépôt d'une couche d'alignement sur la plaque d'électrodes P2, puis par la pulvérisation d'espaceurs. Sur la plaque de contre-électrode P1, on dépose une couche d'alignement, puis on sérigraphie un cordon de colle polymérisable 10 puis on dépose des plots 12 de pâte à l'argent avec une seringue aux endroits appropriés. Après assemblage des deux plaques, on recuit l'ensemble pour polymériser la colle et la pâte à l'argent.

Si ce procédé donne satisfaction, il est clair que les opérations de gravure des ouvertures 24 dans la couche de passivation 22 pénalisent lourdement le procédé qui, sans cette gravure supplémentaire, resterait simple puisque ne nécessitant que deux photogravures, tout au moins dans la variante décrite dans le document FR-A-2 533 072 déjà cité.

La présente invention a justement pour but de remédier à cet inconvénient. A cette fin, elle propose un procédé de réalisation qui permet de conserver la couche de passivation sans toutefois nécessiter de photolithographie supplémentaire pour établir la liaison électrique entre la contre-électrode et ses contacts.

JP-A-57-148 721 divulgue un procédé de réalisation d'une cellule d'affichage dans lequel on assemble deux plaques en polymérisant un cordon de colle et en calcinant une résine conductrice chargée à l'argent qui a été placée à l'extérieur du cordon de colle aux quatre coins d'une des plaques. En suite la cellule est remplie de cristal liquide. Finalement, un faisceau laser est dirigé sur chaque plot de contact formé par la résine conductrice calcinée pour améliorer la conductibilité et pour perforer les couches d'alignement.

### Exposé de l'invention

Selon l'invention, on établit la liaison électrique par la surface extérieure des plots, l'extrémité des contacts ayant été préalablement découverte.

De façon précise, l'invention a pour objet un procédé de réalisation d'une cellule d'affichage dans lequel, de façon connue :
- on dépose sur une première plaque transparente une contre-électrode,
- on dépose sur le pourtour de la contre-électrode un cordon de colle polymérisable,
- on dépose sur la contre-électrode, à l'extérieur du cordon de colle, en des emplacements appropriés, des plots de contact en une colle qui se réticule à une température supérieure à la température de polymérisation de la colle du cordon,
- on dépose sur une seconde plaque des lignes et des colonnes d'adressage et des électrodes de pixels,
- on forme des contacts de connexion de contre-électrode à la périphérie de cette seconde plaque,
- on dépose sur cette seconde plaque une couche de passivation isolante recouvrant entre autres les contacts de contre-électrode,
- on assemble les deux plaques et on polymérise le cordon de colle, les plots de contact portés par la première plaque se trouvant disposés au-dessus des contacts de contre-électrode portés par la seconde plaque mais restant séparés de ceux-ci par la couche de passivation,
- on expose les plots à un faisceau laser de puissance suffisante pour calciner la colle des plots et la rendre conductrice sur toute la hauteur du plot,
- à l'aide du faisceau laser, on perfore en outre la couche de passivation au-dessus des contacts de contre-électrode et on perfore au moins en partie les contacts de contre-électrode.

### Brève description des dessins

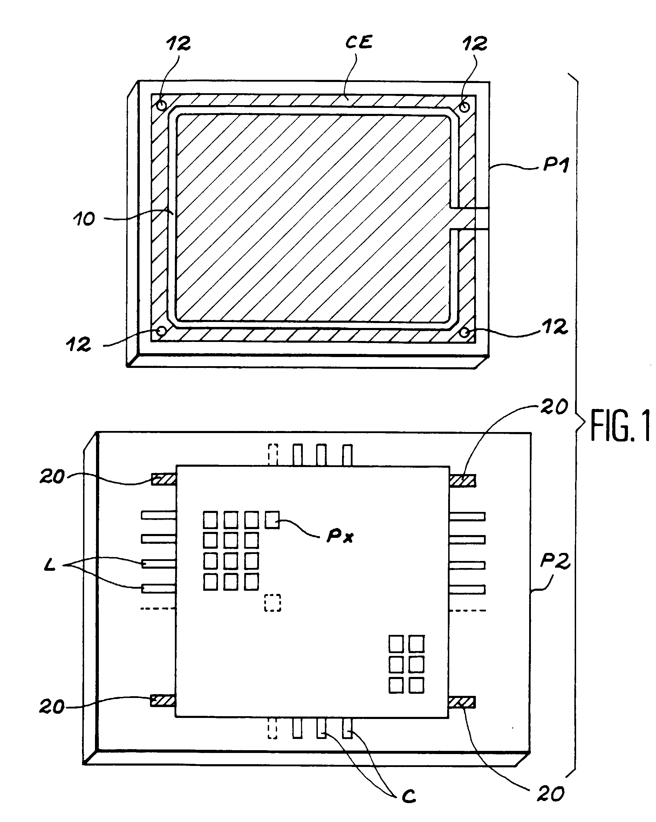

- la figure 1, déjà décrite, montre les deux plaques d'une cellule d'affichage ;
- la figure 2, déjà décrite, est une coupe d'une cellule selon l'art antérieur au niveau du contact de contre-électrode ;
- la figure 3 illustre deux étapes du procédé de l'invention ;

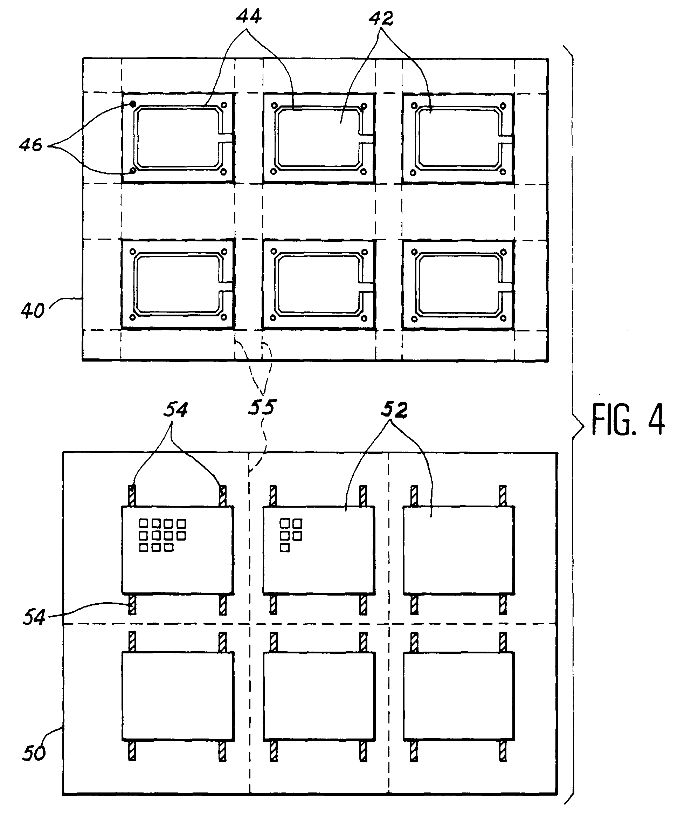

- la figure 4 illustre un mode de réalisation de caractère collectif mettant en oeuvre l'invention.

### Exposé détaillé de modes de réalisation

La figure 3 illustre deux étapes du procédé de l'invention.

Sur la partie (a), on voit la plaque P1 (avec sa contre-électrode CE, son cordon de colle 10, et ses plots de contact 12") reposant sur la plaque P2 avec ses contacts de contre-électrode 20 et sa couche de passivation 22.

Sur la contre-électrode CE, on sérigraphie un cordon de colle polymérisable aux ultraviolets, par exemple la colle référencée UVS 91 chez NORLAND. Puis on dépose dans les zones réservées à cet effet, par exemple dans les coins, des plots de colle époxy thermoréticulable, par exemple la colle H78 de chez NORLAND. Cette colle est isolante. On assemble ensuite les deux plaques P1 et P2. La colle UV est insolée et l'ensemble est étuvé à 60°C pendant 12 heures par exemple. A ce moment, la colle thermique n'est pas polymérisée, car il lui faudrait subit un cycle à 150°C pendant environ 15 minutes. A 60°C, cette colle est toujours molle et contient encore du solvant.

L'assemblage obtenu est illustré sur la partie (a) de la figure 2.

On expose ensuite les plots 12'' à un faisceau laser vertical 30 de longueur d'onde de préférence comprise entre 0,45 et 0,5 µ*m*, ce faisceau étant délivré par une source laser 31 à argon ionisé fonctionnant en continu. La puissance peut être de l'ordre de 300 mW. Le faisceau passe dans une optique de focalisation 32 de grossissement 20X par exemple.

Le faisceau laser 30 calcine la colle 12'' sur une largeur d'environ 10 µ*m*. On déplace la cellule ou l'ensemble d'irradiation pour calciner le plot 12'' sur une bande de l'ordre de quelques millimètres de longueur. La colle devient alors conductrice le long de cette bande.

En outre, la couche de passivation 22 est perforée par le faisceau laser 30 ainsi qu'une partie de la couche métallique 20 du contact de reprise. La conséquence de ce brûlage local 33 est d'assurer une bonne conduction électrique entre l'ITO de la contre-électrode CE et le métal du contact de reprise 20 par l'intermédiaire de la colle calcinée et à travers la couche de passivation perforée.

La résistance de contact obtenue dans cette variante est de quelques dizaines d'Ohms.

Les demandeurs ont essayé plusieurs types de colles thermiques ou polymérisables sous ultraviolets. Les meilleurs résultats ont été obtenus avec une colle H78 non polymérisée. Ceci implique l'utilisation de colle UV pour le collage de la contre-électrode car la colle UV n'exige pas de traitement thermique qui recuirait la colle H78.

Le procédé qui vient d'être décrit est compatible avec un procédé collectif de réalisation de cellules à cristaux liquides. On sait que, pour augmenter la productivité, il est possible de réaliser deux grandes plaques comportant, l'une, plusieurs motifs de contre-électrode et l'autre, autant de matrices actives. On assemble ces grandes plaques, on les traite thermiquement pour les coller l'une à l'autre, puis on casse l'ensemble selon des lignes appropriées 55 pour obtenir des cellules individuelles.

La figure 5 montre comment on peut s'y prendre avec le procédé de reprise de contact de la contre-électrode qui vient d'être décrit. On réalise une première grande plaque 40 avec des motifs de contre-électrode 42 (six dans l'exemple illustré). On réalise, par ailleurs, une seconde grande plaque 50 avec des matrices de pixels 52 et leurs contacts de contre-électrode 54.

Deux possibilités sont offertes. Dans la première, après sérigraphie de la colle UV 44, on dépose à la seringue des gouttes de colle thermique 46 ; puis les deux plaques 40 et 50 sont assemblées et la colle UV 44 est insolée puis recuite pendant 12 heures à 60°C. Il est alors possible de faire les reprises de contre-électrode au laser, sur les plaques assemblées. Dans la seconde, on découpe les grandes plaques, on sépare les cellules individuelles et on effectue les reprises avant ou après remplissage.

La reprise de contre-électrode avant découpe est plus simple car elle nécessite beaucoup moins de manipulations. Il suffit de programmer le déplacement du faisceau laser sur les différents points de reprise, alors que, dans la seconde méthode, chaque cellule doit être manipulée.

## Revendications

1. Procédé de réalisation d'une cellule d'affichage dans lequel :
- on dépose sur une première plaque transparente (P1) une contre-électrode (CE),
- on dépose sur le pourtour de la contre-électrode un cordon de colle polymérisable (10),
- on dépose sur la contre-électrode, à l'extérieur du cordon de colle (10), en des emplacements appropriés, des plots de contact (12) en une colle qui se réticule à une température supérieure à la température de polymérisation de la colle du cordon (10),
- on dépose sur une seconde plaque (P2) des lignes (L) et des colonnes (C) d'adressage et des électrodes de pixels (Px),
- on forme des contacts de connexion de contre-électrode (20) à la périphérie de cette seconde plaque (P2),
- on dépose sur cette seconde plaque (P2) une couche de passivation isolante (22) recouvrant entre autres les contacts de contre-électrode (20),
- on assemble les deux plaques (P1, P2) et on polymérise le cordon de colle (10), les plots de contact (12) portés par la première plaque (P1) se trouvant disposés au dessus des contacts de contrelectrodes (20) portés par la seconde plaque (P2) mais restant séparés de ceux-ci par la couche de passivation (22)
- on expose les plots (12) à un faisceau laser (30) de puissance suffisante pour calciner la colle des plots et la rendre conductrice sur toute la hauteur du plot (12),
- à l'aide du faisceau laser (30), on perfore en outre la couche de passivation (22) au-dessus des contacts de contre-électrode (20) et on perfore au moins en partie les contacts de contre-électrode (20).

2. Procédé selon la revendication 1, dans lequel :
- on dépose sur une première grande plaque (40) plusieurs motifs de contre-électrode (42),
- on dispose des cordons de colle polymérisable (44) sur la première grande plaque (40) autour des motifs de contre-électrode (42),
- on dépose sur la première grande plaque (50), les plots de contact (46),
- on dépose sur une seconde grande plaque (50) autant d'ensembles d'électrodes (52) que des motifs de contre-électrode avec des contacts de contre-électrode (54) et une couche de passivation,
- on assemble les deux grandes plaques (40, 50),
- on calcine en partie les plots (46) sur leur hauteur et l'on perfore la couche de passivation à l'aide d'un faisceau laser (30), les grandes plaques (40, 50) étant toujours assemblées,
- on découpe l'assemblage pour séparer les différentes cellules,
- on remplit et on scelle chaque cellule.

## Patentansprüche

1. Verfahren zur Herstellung einer Anzeigezelle, in welchem
- auf einer transparenten ersten Platte (P1) eine Gegenelektrode (CE) abgeschieden und
- am Umfang der Gegenelektrode ein Band (10) aus polymerisierbarem Klebstoff aufgebracht wird,
- auf der Gegenelektrode außerhalb des Klebebandes (10) an geeigneten Stellen Kontaktstifte (12) aus einem Klebstoff, der bei einer Temperatur vernetzt, die über der Polymerisationstemperatur des Klebstoffs des Bandes (10) liegt, aufgebracht,
- auf einer zweiten Platte (P2) Adressierungszeilen (L) und -spalten (C) und Bildpunktelektroden (Px) aufgebracht und
- am Rand der zweiten Platte (P2) Anschlußkontakte (20) für die Gegenelektrode gebildet werden,
- auf dieser zweiten Platte (P2) eine isolierende Passivierungsschicht (22), die unter anderem die Anschlußkontakte (20) für die Gegenelektrode bedeckt, abgeschieden wird,
- die beiden Platten (P1, P2) miteinander verbunden werden und das Klebeband (10) polymerisiert wird, wobei sich die von der ersten Platte (P1) getragenen Kontaktstifte (12) über den von der zweiten Platte (P2) getragenen Anschlußkontakten (20) für die Gegenelektrode befinden, aber von diesen durch die Passivierungsschicht (22) getrennt bleiben,
- die Kontaktstifte (12) einem Laserstrahlenbündel (30) ausgesetzt werden, dessen Leistung ausreicht, den Klebstoff der Kontaktstifte zu glühen und ihn über die gesamte Höhe des Kontaktstifts (12) leitfähig zu machen, und
- durch das Laserstrahlenbündel (30) außerdem die Passivierungsschicht (22) über den Anschlußkontakten (20) für die Gegenelektrode perforiert wird und die Anschlußkontakte (20) für die Gegenelektrode wenigstens teilweise perforiert werden.

2. Verfahren nach Anspruch 1, in welchem
- auf einer ersten großflächigen Platte (40) mehrere Gegenelektrodenmuster (42) abgeschieden,
- Bänder (44) aus polymerisierbarem Klebstoff auf der ersten großflächigen Platte (40) um die Gegenelektrodenmuster (42) herum angeordnet,
- auf der ersten großflächigen Platte (50) die Kontaktstifte (46) aufgebracht,
- auf einer zweiten großflächigen Platte (50) ebensoviele Elektrodeneinheiten (52) wie Gegenelektrodenmuster mit Anschlußkontakten (54) für die Gegenelektrode und einer Passivierungsschicht aufgebracht,
- die beiden großflächigen Platten (40, 50) miteinander verbunden und
- die Kontaktstifte (46) teilweise über ihre Höhe geglüht werden und die Passivierungsschicht durch ein Laserstrahlenbündel (30) perforiert wird, wobei die großflächigen Platten (40, 50) weiterhin miteinander verbunden bleiben,
- der Verbund zerschnitten wird, um die einzelnen Zellen voneinander zu trennen, und
- die einzelnen Zellen gefüllt und versiegelt werden.

## Claims

1. Method for embodying a display cell in which:
- a counter-electrode (CE) is placed on a first transparent plate (P1),
- a polymerizable glue cord (10) is placed on the circumference of the counter-electrode,
- contact blocks (12) are placed on the counter-electrode outside the glue cord (10) at appropriate locations and made from a glue which crosslinks at a temperature higher than the temperature for polymerizing the glue of the cord (10),
- addressing rows (L) and columns (C) and pixel electrodes (Px) are placed on a second plate (P2),
- counter-electrode connection contacts (20) are formed at the periphery of this second plate (P2),
- a non-conducting passivation film coating (22) inter alia covering the counter-electrode contacts (20) is placed on this second plate (P2),
- the two plates (P1, P2) are assembled and the glue cord (10) is polymerized, the contact blocks (12) borne by the first plate (P1) being disposed above the counter-electrode contacts (20) carried by the second plate (P2) but remaining separate from the latter by means of the passivation film (22),
- the blocks (12) are exposed to a laser beam (30) having sufficient power so as to calcine the glue of the blocks and render it conductive over the entire height of the block (12),
- with the aid of the laser beam (30), the passivation film (22) is in addition perforated above the counter-electrode contacts (20) and at least the counter-electrode contacts (20) are partly perforated.

2. Method according to claim 1, wherein:
- on a first large plate (40) is placed several counter-electrode patterns (42),
- polymerizable glue cords (44) are disposed on the first large plate (40) around counter-electrode patterns (42),
- the contact blocks (46) are placed on the first large plate (50),
- deposition takes place on a second large plate (50) having the same number of electrode units (52) as counter-electrode patterns, with counter-electrode contacts (54) and a passivation film,
- the two large plates (40, 50) are assembled,
- the blocks (46) are partly calcined over their height and the passivation film is perforated with the laser beam (30), the large plates (40, 50) still being assembled,
- the assembly is cut so as to separate the various cells,
- each cell is filled and sealed.
